# EUROPEAN PATENT APPLICATION

(11) **EP 1 389 748 A2**
(43) Date of publication of application: **18.02.2004**
(21) Application number: 03254978.4
(22) Date of filing: 12.08.2003
(51) Int. Cl.: G05B 19/408

(54) **Numerical controller**

(30) Priority: 14.08.2002 JP 2002236628
(71) Applicant: Fanuc Ltd, Minamitsuru-gun, Yamanashi 401-0597 (JP)
(72) Inventor: Hosokawa, Masahiko, Room 11-407 Fanuc, Minamitsuru-gun, Yamanashi, 401-0511 (JP); Miyake, Masahiko, Hachioji-shi, Tokyo, 193-0941 (JP)
(74) Representative: Billington, Lawrence Emlyn

(57) **Abstract**

A numerical controller capable of quickly sending/receiving data of a machining program to/from a storage device or medium and quickly editing the data of the machining program. The machining program is divided into a plurality of program blocks and additional information is added to each of the program blocks to be associated therewith to form input/output units (M). The additional information includes front and rear link data (61, 62) designating input/output units immediately preceding and following each input/output unit (M), respectively, in a sequence of the machining program, and data of an effective character length of the program block. In executing the machining program while reading the machining program stored in the storage device or medium, the input/output units (M) are successively read and executed according to the front/rear link data (61, 62). When a branch instruction is included in the program block in execution, an input/output unit including a line of label designated by the branch instruction is searched using the front/rear link data (61, 62), or is read according to data for specifying such input/output unit (M) prepared to be associated with the branch instruction in advance. In editing the machining program, only the input/output units (M) to be edited are read from the storage device or medium and edited.

## Description

The present invention relates to a numerical controller suitable for use in operating a machine tool while reading a machining program stored in a storage device or medium, and in particular to a numerical controller capable of efficiently executing a machining program including a branch instruction and also editing a machining program stored in the storage device or medium.

In the case of DNC (direct numerical control) operation of a machine tool for operating the machine tool while reading the machining program from a storage device such as a disk drive, the machining program is sequentially read from beginning to end thereof by a unit of a character to be processed. Therefore, if a branch instruction is included in the machining program, the processing is discontinued and it is necessary to read the machining program from the beginning again for executing the branch instruction, to make a considerable waste of time. Further, for performing editing of a machining program, such as modification, deletion and addition, it has been necessary to read the entire machining program to be edited, and the edited entire machining program is outputted to the storage device or medium, to require a considerable time in the processing.

An embodiment of the present invention may provide a numerical controller capable of reducing time required in operating a machine tool while reading a machining program stored in a storage device or medium, and in editing the machining program stored in the storage device or medium. Further, the embodiment may provide a numerical controller capable of effectively executing a machining program prepared to include a branch instruction in the storage device or medium.

A numerical controller of the present invention comprises: a storage device or medium for storing input/output units each including program block data obtained by dividing a machining program and additional information associated with the program block data; a processor for processing the input/output units; and an interface for inputting/outputting the input/output units between the storage device or medium and the processor. The additional information includes an effective data length of the program block, front input/output unit data designating an input/output unit immediately preceding each input/output unit, and rear input/output unit data designating an input/output unit following each input/output unit in a sequence of the machining program.

The processor may read a first input/output unit including a program block corresponding to a beginning part of the machining program and successively reads input/output units stored in the storage device or medium according to rear input/output unit data in the read input/output unit through the interface, successively executes the program blocks included in the read input/output units.

When a branch instruction is included in the program block of the input/output unit in execution, the processor may read input/output units preceding the read input/output unit using the front input/output unit data and may read input/output units following the input/output unit in execution using the rear input/output unit data to search a line designated by the branch instruction.

The additional information may further include data specifying an input/output unit including a line designated by a branch instruction, and in this case, when the branch instruction is included in the program block of the input/output unit in execution, the processor reads the input/output unit specified by the data.

The processor may read only an input/output unit or input/output units to be edited from the storage device or medium through the interface.

In particular, the processor may read only an input/output unit to be edited and modify a program block and an effective data length included in the read input/output unit.

The processor may delete an input/output unit by changing rear input/output unit data of an input/output unit designated by front input/output unit data of the input/output unit to be deleted to rear input/output unit data of the input/output unit to be deleted, and changing front input/output unit data of an input/output unit designated by rear input/output data of the input/output unit to be deleted to the front input/output data of the input/output unit to be deleted.

The processor may add a new input/output unit including program block data and additional information. In this case, the processor changes rear input/output unit data of an input/output unit designated by front input/output data of the input/output unit to be added to data specifying the input/output unit to be added, and changes front input/output unit data of an input/output unit designated by the rear input/output data of the input/output unit to be added to data specifying the input/output unit to be added.

With the above structure of the numerical controller, since data amount of the machining program to be inputted from the storage device or medium is reduced for executing the branch instruction and for editing the machining program, time required for input and output of the machining program is shortened.

### BRIEF DESCRIPTION OF THE DRAWINGS

FIG. 1 is a block diagram of a computerized numerical controller (CNC) and peripheral devices including a storage device or medium according to an embodiment of the present invention;
FIG. 2 is a diagram showing structure of data of one input/output unit;
FIG. 3 is a diagram showing relation of a first input/output unit to a fourth input/output unit;
FIG. 4 is a diagram showing input of program data from the external device to the CNC by the input/output unit;
FIG. 5 is a diagram showing output of program data from the CNC to the external device by the input/output unit;
FIG. 6 is a diagram showing editing of the program data within one input/output unit;
FIG. 7 is a diagram showing deletion of an input/output unit requiring editing of data over a plurality of input/output units; and
FIG. 8 is a diagram showing addition of an input/output unit requiring editing of data over a plurality of input/output units.

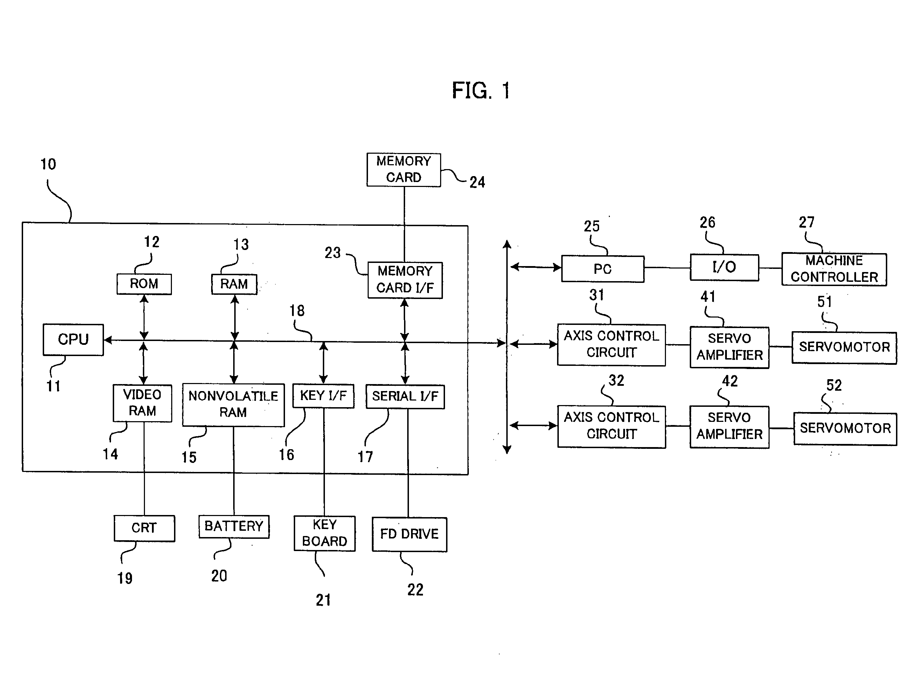

A numerical controller with peripheral devices according to an embodiment of the present invention is shown in FIG. 1. As shown in FIG. 1, a computerized numerical controller (CNC) 10 for numerically controlling respective axes of a machine tool has a general hardware configuration comprising a CPU 11 for controlling a whole system, and a ROM 12, a RAM 13, a video RAM 14, a nonvolatile RAM 15, a key interface 16 and a serial interface 17 which are connected to the CPU 11 through a bus 18.

The video RAM 14 is connected to a CRT 19 and the nonvolatile RAM 15 is connected to a battery 10 for backing up the nonvolatile RAM 15. The key interface 16 is connected to a keyboard 21 for an operator's manual operation. The serial interface 17 is connected to a floppy disk (FD) drive 22 as a storage device for storing data using a floppy disk as a storage medium, and a memory card interface 23 is connected to a memory card 24 as a storage medium for use in sending/receiving of programs. Details of data structure, input/output procedure and editing procedure of machining programs prepared and stored in the storage device or medium will be described later.

The machine tool has a general structure comprising axis controllers 31, 32 for respective axes (two axes in this embodiment), servo amplifiers 41, 42, servomotors 51, 52, as well as a programmable controller (PC) 25, a machine controller 27 and an input/output (I/O) device 26 for connecting the machine controller 17 and the PC 25.

In executing a machining program, data of the machining program are successively outputted from a floppy disk in the floppy disk drive 22 through the serial interface 17 or the memory card 24 through the memory card interface 23 and temporally stored in the nonvolatile RAM 15, and the CPU 11 successively reeds the data of the machining program stored in the nonvolatile RAM 15 and executes the machining program to output motion commands to the axes control circuits 31, 32 for the respective axes of the machine tool.

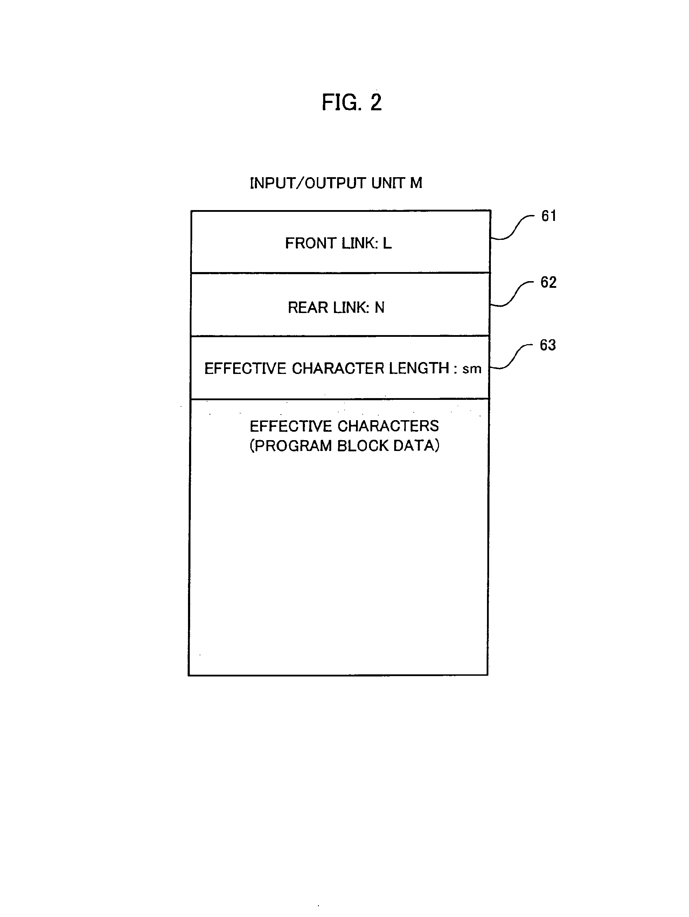

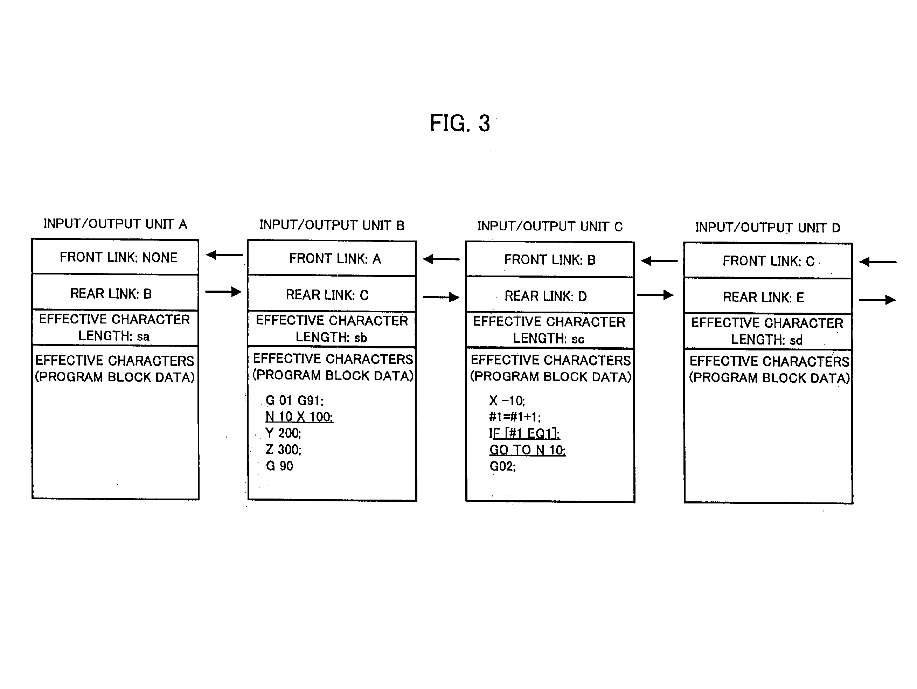

The data structure of the machining program will be described referring to FIGS. 2 and 3. The machining program is divided into a plurality of program blocks and additional information is added to each of the program blocks to be associated therewith to form input/output units having the same number as that of the program blocks in one-to-one relation with the program blocks. Thus prepared input/output units are stored in the storage device or the storage medium such as the floppy disk drive 22 or the memory card 24. These input/output units are referred to as an input/output unit A, an input/output unit B, ..., an input/output unit M, an input/output unit N, ... , according to a sequence of the original machining program before dividing in this example. The number of the prepared input/output units is "n" in this example.

Data structure of the input/output unit M as an example of the input/output unit is shown in FIG. 2. Each input/output unit comprises a program block as a core of the input/output unit and additional information associated therewith. The program block is a part of the original machining program to be assigned to the input/output unit and comprises data of effective characters which describe statements, etc. The additional information includes front link data 61 designating an immediately preceding input/output with respect to each input/output unit in the sequence of the machining program, rear link data 62 designating a following input/output unit in the sequence of the machining program, and data 63 representing data length of the effective characters contained in the program block. The effective character length is indicated by the number of bytes of the effective characters of the program block as represented by "sm" in this example. Counting of the effective character length is automatically carried out by an information processing device provided independently of the CNC 10 or by the CNC 10 in preparing the input/output units from the original machining program. In the case where the effective character length is increased or decreased by editing by the CNC 10, the effective character length is automatically recounted by the CNC 10.

Since the sequence of the machining program is such as A→B→, ..., →L→M→N, ..., contents of the front link data and the rear link data of the input/output unit M are "L" and "N", respectively. If any input/output unit is deleted or a new input/output unit is added by editing, the front link data and the rear link data may be rewritten, as described later. Further, since there is no input/output unit to be designated by the front link data in the first input/output unit A corresponding to a beginning part of the machining program, data indicating none is assigned as such front link data. Similarly, since there is no input/output unit to be designated by the rear link data in the last input/output unit corresponding to the end of the machining program, data indicating none is assigned as such rear link data.

In the case where a machining program includes a branch instruction, it is highly provable that a line of a label designated by the branch instruction is included in an input/output unit other than the input/output unit including the branch instruction. It is provable that a line of a label specified by the branch instruction exists in an input/output unit other than the input/output unit including the branch instruction. An example of first four input/output units of the machining program including a branch instruction is shown in FIG. 3.

As shown in FIG. 3, contents of the front link data of the input/output units A, B, C and D are "NONE", "A", "B", and "C", respectively, and contents of the rear link data of the input/output units A, B, C and D are "B", "C", "D" and "E", respectively (an input/output unit E is not shown). In this example, the input/output unit C includes a branch instruction "IF [#1EQ1] GO TO N10" (underline added). The meaning of "IF [#1EQ1] GO TO N10" is "go to a line designated by label "N10" if a value of the index #1 is 1". The line of label "N10" is included in the input/output unit B. In this example of the machining program, since the value of the index #1 equals "1" only at the first time, the branch instruction is executed only once.

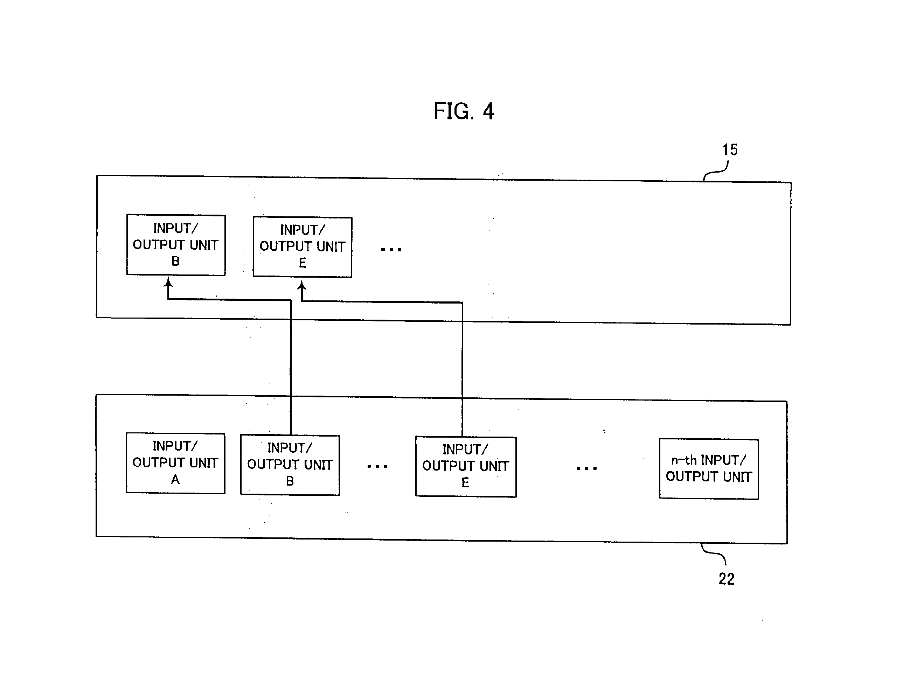

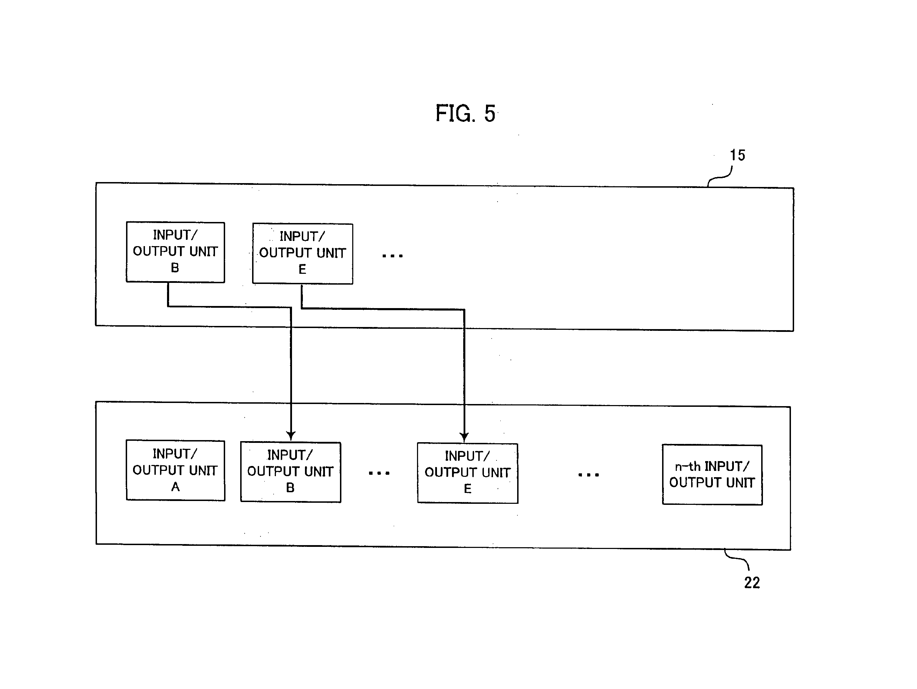

The machining program prepared in the form of input/output units and stored in the storage device or medium such as the floppy disk drive 22 or the memory card 24 is inputted into the CNC 10 for the execution or the editing of the machining program. Also, the machining program after editing in the CNC 10 may be outputted to the storage device or medium. Procedures of the inputting and outputting of the machining program from/to the storage device or medium are shown in FIG. 4 and FIG. 5, respectively. As shown in FIGS. 4 and 5, it is not necessary to input/output data of the machining program sequentially from the beginning to the end, contrary to the conventional art. For example, the necessary input/output unit or units specified by a manual operation on the keyboard 21 may be inputted and outputted before and after the editing of the machining program.

Further, the machining program may be executed by the CNC 10 while reading the machining program prepared in the form of the input/output units and stored in the storage device or medium. The reading of the machining program is performed by successively reading the input/output units. The order of reading and executing the input/output units is determined according to the front/rear link data included in the additional information in each input/output unit. The input/output unit having the front link "NONE" is determined to be the first input/out unit. The CNC 10 receives data of the first input/output unit from the storage device or medium and temporally stores the data in the internal memory, e.g. the nonvolatile RAM 15 and reads the data to start execution of the machining program.

Parallel to the execution of the program block in the first input/output unit, data of the second input/output unit designated by the rear link data in the first input/output unit is inputted to the CNC 10 from the storage device or medium and stored in the internal memory. The CPU 11 of the CNC 10 executes the program block in the second input/output unit after completing the program block in the first input/output unit. Subsequently, the program blocks in the third, the fourth, ..., the last input/output units are successively executed. The last input/output unit is determined by the rear link data "NONE".

The foregoing is a basic procedure of reading and executing the machining program. The procedure is modified if the machining program includes a branch instruction. The procedure in the case where the input/output unit includes a branch instruction will be described using the example of input/output units shown in FIG. 3. The procedure is modified in dependence on the following conditions (1) and (2).
(1) In the case where data (block name or number) for specifying an input/output unit including a line of label designated by a branch instruction is prepared to be available for the CNC 10, e.g. such data is stored in the additional information of the input/output unit including the branch instruction;
   The input/output unit including the line of the label designated by the branch instruction is read and executed irrespective of the front/rear link data of the input/output unit including the branch instruction. In the example of FIG. 3, the CNC 10 successively reads and executes the input/output unit A, the input/output unit B, the input/output unit C which includes a branch instruction, and when the branch instruction is read in the execution of a program block of the input/output unit C, the input/output unit B including the label "N10" specified by the data prepared in the additional information is read and the line of the label "N10" and subsequent lines are executed. After finishing the execution of the input/output unit B, the input/output unit C is read again and executed according to the rear link data of the input/output unit B. In the second time execution of the input/output unit C, the branch instruction is invalid since the value of #1 equals "2", and thus the procedure continues execution of the input/output unit C, the unit D, ... according to the basic rule, unless another branch instruction is read.
(2) In the case where the data for specifying an input/output unit including a line of label designated by a branch instruction is not available for the CNC 10;

The input/output unit including the line of the label designated by the branch instruction is searched using the front/rear link data of the input/output unit including the branch instruction from peripheral input/output units.

In the example of FIG. 3, the CNC 10 successively reads and executes the input/output unit A, the input/output unit B, the input/output unit C which includes a branch instruction, and when the branch instruction is read in the execution of a program block of the input/output unit C, the input/output unit B is read according to the front link data of the input/output unit C. In this example, since the input/output unit B includes the line of the label "N10" designated by the branch instruction, the line of the label "N10" and subsequent lines are executed. The subsequent procedure is the same as in the case (1).

If the line of the label designated by the branch instruction is not included in the first read input/output unit, the input/output unit designated by the rear link data of the input/output unit including the branch instruction is read. In the example of FIG. 3, if the line of the label N10 designated by the branch instruction were not included in the first read input/output unit B, the input/output unit D is read according to the rear link data of the input/output unit C. Further, if the line of the label N10 is not included in the input/output unit D, the input/output unit A designated by the front link data of the input/output unit B is read. Thus, even if the input/output unit including the line of the label designated by the branch instruction is not directly known, the line of the label designated by the branch instruction is found out early with high probability by the search from the input/output units in the vicinity of the input/output unit including the branch instruction. Conventionally, since the whole machining program functions as a single input/output unit, the machining program is read from the beginning thereof again when the branch instruction is read, to lower the efficiency of the procedure.

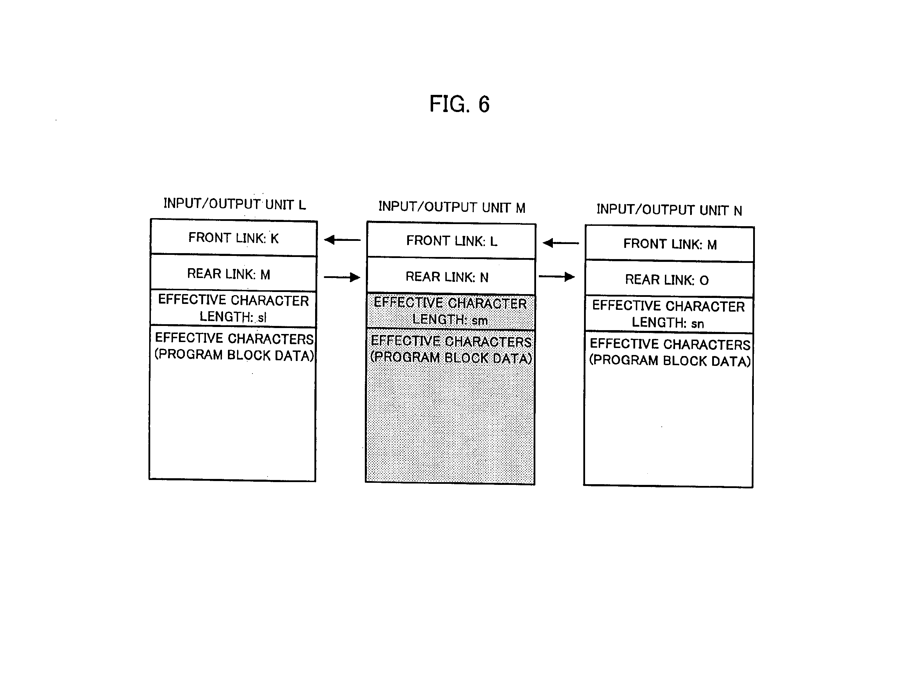

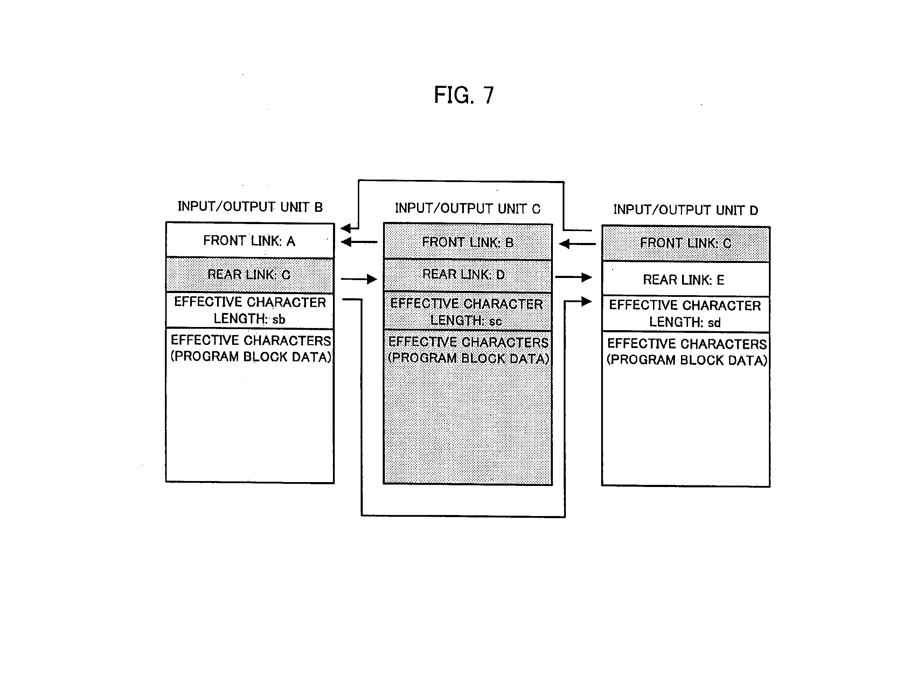

The editing of the machining program by the CNC 10 using the input/output units will be described referring to FIGS. 6-8. As shown in FIGS. 4 and 5, an arbitrary one or more of the input/output units of the machining program stored in the storage device or medium can be inputted into the CNC 10 and edited on the CNC 10, and the edited input/output unit or units are stored in the storage device or medium. There are three cases in editing the machining program in practice, which can be applied to a complicated editing procedure by combination, as follows;
(i) Editing within one input/output unit: In this case, a part of a program block belonging to one input/output unit is edited, as shown in FIG. 6. Since this editing does not make any influence on the other input/output units and the front and rear link data, the editing procedure terminates by the editing of the program block. For instance, in the case where the edition is effected on the program data in the input/output unit M, only the input/output unit M is inputted into the CNC 10 from the storage device or medium and edited, and the edited input/output unit M is outputted to the storage device or medium to be stored. In this storage, the input/output unit before the editing is rewritten to be the edited input/output unit. The input/output unit before the editing may be preserved as historical data of editing.
(ii) Editing requiring modification over a plurality of input/output units (deletion of an input/output unit): The edition in this case is to delete an input/output unit including the unnecessary program block. In addition to the deletion of the input/output unit, it is necessary to modify rear link data of an input/output unit designated by the front link data of the input/output unit to be deleted, and front link data of an input/output unit designated by the rear link data of the input/output unit to be deleted.
   For instance, in the case where the input/output unit C is to be deleted as shown in FIG. 7, the rear link data of the input/output unit B is changed from "C" to "D", and the front link data of the input/output unit D is changed from "C" to "B". For the above editing, the input/output units B, C and D are inputted into the CNC 10 from the storage device or medium according to a command input from the keyboard 21, and the input/output units B, C and D are edited and then outputted to the storage device or medium to be stored therein. In this procedure, the input/output units B and D before the editing are rewritten to store the edited input/output units and the input/output unit C is deleted. The input/output units before the edition may be preserved as historical data of editing.
(iii) Editing requiring modification over a plurality of input/output units (addition of an input/output unit): Editing in this case is to add a new input/output unit. As well as the addition of data of the new input/output unit, it is necessary to modify rear link data of an input/output unit designated by the front link data of the input/output unit to be added, and front link data of an input/output unit designated by the later link data of the input/output unit to be added.

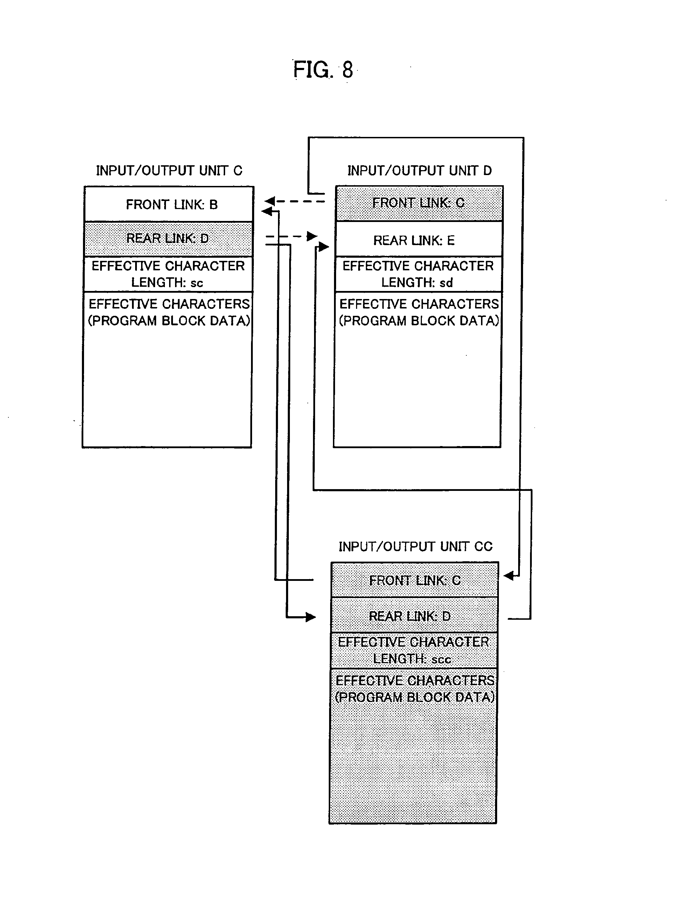

For instance, in the case where a new input/output unit CC is to be added between the input/output unit C and the input/output unit D, as shown in FIG. 8, the rear link data of the input/output unit C is changed from "D" to "CC", and the date of the front link of the input/output unit D is changed from "C" to "CC". The front link data and the rear link data of the new input/output unit CC are set to "C" and "D", respectively. For the above editing, the input/output units C and D are inputted into the CNC 10 from the storage device of medium according to a command input form the keyboard 21, and the input/output units C and D are modified and the new input/output unit CC is added and then outputted to the storage device or medium to be stored therein. In this procedure, the input/output units C and D before the editing are rewritten to store the edited input/output units and the new input/output unit CC is added. The input/output units before the edition may be preserved as historical data of editing.

As described, according to the presents eembodiment, the machining program can be outputted from the storage device or medium to the CNC and vice versa in the form of input/output units so that the sending/receiving of the data necessary for execution or editing of the machining program are performed in a shorter time in comparison with the conventional input/output of the whole machining program as a unit. Particularly in operating a machine tool while reading a machining program including branch instructions from a storage device or medium when a branch instruction is read in executing the machining program, a line designated by the branch instruction is found out at high speed. Thus, the reading of the machining program is performed at high speed to shorten a machining time in comparison with the conventional art where the execution of the machining program is suspended for waiting completion of reading the machining program.

Further, the editing of the machining program stored in the storage device or medium can be performed by inputting only the input/output unit or units to be edited from the storage device or medium into the CNC, so that time required for editing the machining program is shortened.

## Claims

1. A numerical controller for controlling a machine according to a machining program, comprising:
a storage device or medium for storing input/output units each including program block data obtained by dividing the machining program and additional information associated with the program block data, said additional information including an effective data length of the program block, front input/output unit data designating an input/output unit immediately preceding each input/output unit and rear input/output unit data designating an input/output unit following each input/output unit in a sequence of the machining program;
a processor for processing the input/output units; and
an interface for inputting/outputting the input/output units between said storage device or medium and said processor.

2. A numerical controller according to claim 1, wherein said processor reads a first input/output unit including a program block corresponding to a beginning part of the machining program and successively reads input/output units stored in said storage device or medium according to rear input/output unit data in the read input/output unit through said interface, and successively executes the program blocks included in the read input/output units.

3. A numerical controller according to claim 2, wherein when a branch instruction is included in the program block of the input/output unit in execution, said processor reads input/output units preceding the input/output unit in execution using the front input/ output unit data and reads input/output units following the input/output unit in execution using the rear input/output unit data to search a line designated by the branch instruction.

4. A numerical controller according to claim 2 or 3, wherein said additional information further includes data specifying an input/output unit including a line designated by a branch instruction, and when the branch instruction is included in the program block of the input/output unit in execution said processor reads the input/output unit specified by the data.

5. A numerical controller according to any preceding claim, wherein said processor reads only an input/output unit or input/output units to be edited from said storage device or medium through said interface.

6. A numerical controller according to claim 5, wherein said processor reads only an input/output unit to be edited and modifies a program block and an effective data length included in the read input/output unit.

7. A numerical controller according to claim 5 or 6, wherein said processor deletes an input/output unit by changing rear input/output unit data of an input/output unit designated by front input/output unit data of the input/output unit to be deleted to rear input/output unit data of the input/output unit to be deleted, and changing front input/output unit data of an input/output unit designated by rear input/output data of the input/output unit to be deleted to the front input/output data of the input/output unit to be deleted.

8. A numerical controller according to claim 5, 6 or 7 wherein said processor adds a new input/output unit including program block data and additional information and changes rear input/output unit data of an input/output unit designated by front input/output data of the input/output unit to be added to data specifying the input/output unit to be added, and changes front input/output unit data of an input/output unit designated by the rear input/output data of the input/output unit to be added to data specifying the input/output unit to be added.
